# EUROPEAN PATENT APPLICATION

(11) **EP 2 913 806 A1**
(43) Date of publication of application: **02.09.2015**
(21) Application number: 15151521.0
(22) Date of filing: 16.01.2015
(51) Int. Cl.: G07F 19/00

(54) **Self-service terminal (SST) thin client**

(30) Priority: 28.02.2014 US 201414194081
(71) Applicant: NCR Corporation, Duluth, GA 30096 (US)
(72) Inventor: Monaghan, Andrew, Dundee, Tayside DD1 4LF (GB); Han, Richard, Lundie, Tayside DD2 5NW (GB)
(74) Representative: MacLeod, Roderick William

(57) **Abstract**

Self-Service Terminal (SST) thin clients and operation thereof are provided. A SST (110 or 210) includes an operating system (120 or 220), and authorized thin-client application (130 or 230), and an authorized agent (150 or 240). The OS (120 or 220) is configured to restrict execution on the SST (110 or 210) to authorized applications (130 or 230). The authorized thin-client application (130 or 230) is configured to access predefined peripheral devices (270) within the SST (110 or 210) and an authorized server (180 or 280). In an embodiment, the authorized agent (150 or 240) is configured to connect to the authorized server (180 or 280) to: manage updates to the OS (120 or 220) received from the authorized server (180 or 280) and receive customizations from the authorized server (180 or 280) to configure the authorized thin-client application (130 or 230).

## Description

At bank branches, the bank provides a number of Automated Teller Machines (ATMs) and teller stations where customers can transact independent of tellers at the ATMs and where customers can transact with tellers at the teller stations.

The ATM hardware and software are closely controlled and monitored by the servicing organization of the bank. Network access outside the bank branch is restricted to just secure financial networks. Servicing engineers have to physically be present at each ATM to service that ATM even when the service required is related to a software asset.

The servicing organization may service multiple different bank branches and each bank branch may have different assets or a different configuration of assets (hardware and software) for each ATM within that bank branch.

This leads to highly coupled heterogeneous environments across bank branches and even within a same bank branch. The servicing organization has to deal with a client-centric servicing approach, requiring client-specific or even installation-specific (for a same client) experts. This is inefficient and costly to both the bank and the servicing organization.

Moreover, the client banks have begun to manage updates and replacements to their hardware and software assets because of security and expense issues associated with such tasks. So, asset updates are infrequent and any desired customization of the assets is done across the bank's entire fleet of assets, even though the banks desire the ability to move from their existing coarse-grain model of customization to a more fine-grain model of customization. With the present state of technology in the industry, the effort and expense to achieve these bank goals remain elusive.

In various embodiments, Self-Service Terminal (SST) thin clients and techniques for operating SSTs as thin clients are provided.

According to an embodiment, a SST is provided that includes an operating system (OS), an authorized thin-client application, and an authorized agent. The OS is configured to restrict execution on the SST to authorized applications. The authorized thin-client application is configured to access predefined peripheral devices within the SST and an authorized server. The authorized agent is configured to connect to the authorized server and to manage updates to the OS received from the authorized server

According to a first aspect of the present invention there is provided a Self-Service Terminal (SST), comprising: an operating system (OS) configured to restrict execution on the SST to authorized applications; an authorized thin-client application configured to access predefined peripheral devices within the SST and an authorized server; and an authorized agent configured to connect to the authorized server and to manage updates to the OS received from the authorized server.

The SST optionally further comprises an authorized maintenance application configured to execute on the SST and operable to provide: maintenance, testing, and diagnostic functions to an authorized user of the SST.

The SST optionally further comprises platform-specific applications implemented as functions accessible within the OS.

The authorized agent is optionally further configured to: (i) download content anticipated for use by the authorized thin client application, (ii) intercept requests from the authorized thin client application to the authorized server for content, and (iii) provide the content to the authorized thin client application in response to the intercepted requests.

The authorized agent is optionally further configured to receive customization instructions from the authorized server and apply those customizations to the authorized thin client application.

The authorized agent is optionally further configured to apply some customization instructions during initialization of the SST and other of the customization instructions on a transaction basis based on an identity of a customer.

The authorized thin client application is optionally further configured to: use a peripheral interface for interacting with the predefined peripheral devices and use a user interface for interacting with a customer transacting at the SST.

The user interface is optionally a web-based browser interface.

According to a second aspect of the present invention there is provided a method of managing a network of self-service terminals, the method comprising: receiving a request from an authorized agent executing on a self-service terminal in the network; ascertaining if the self-service terminal is executing a latest version of an operating system or application; providing the latest version of the operating system or application, respectively, in the event that the latest version is not executing on the self-service terminal, where the latest version includes a cryptographic message that can be validated by the self-service terminal , and wherein the latest version of the operating system or application is identical for a plurality of self-service terminals in the network.

The step of ascertaining if the self-service terminal is executing a latest version of an operating system or application optionally includes the sub-step of comparing a version of the operating system received as part of the request with the latest version available for self-service terminals in that network.

The step of providing the latest version of the operating system or application optionally includes providing the same latest version to all of the self-service terminals in the network, in response to requests therefor, so that all of the self-service terminals in the network have a homogeneous software stack identical to the other self-service terminals in the network.

The method optionally further comprises the step of providing content to the self-service terminal for presentation to a customer of the self-service terminal as part of a customer transaction.

The method optionally comprises the further step of establishing a fixed and predefined network connection to each self-service terminal in the network, and creating a virtual private network connection to each of the self-service terminals in the network.

According to a third aspect of the present invention there is provided a method comprising: initiating, on a Self-Service Terminal (SST), a thin-client application for execution on the SST; applying, by an authorized agent of the SST, a customization to the thin-client application received from a server; and transacting, by the thin-client application on the SST, with a customer, the server or the server through the authorized agent, and at least one peripheral device coupled to the SST.

The method optionally further comprises forcing, by the authorized agent, an update received from the server to the thin-client application.

The method optionally further comprises initiating, by the authorized agent, an update to an operating system (OS) executing on the SST.

The method optionally further comprises passing, by the thin-client application, secure communications from the at least one peripheral device to one of: the authorized agent for delivery to the server and the server.

The method optionally further comprises performing, by a maintenance application on the SST, one or more of: a diagnostic operation, a maintenance operation, and a test operation.

The method optionally further comprises reporting, by the authorized agent results produced by the maintenance application to the server.

The method optionally further comprises providing, by a peripheral application on the SST, error logging, settings management, and application services for the at least one peripheral device.

The step of transacting optionally further includes presenting, by the thin-client application, a web-based interface to the customer on a display of the SST.

According to a fourth aspect of the present invention there is provided a method comprising: interacting, on a server, with a plurality of authorized agents, each authorized agent executing on a Self-Service Terminals (SST); facilitating, by the server, transactions on each SST though communications of thin-client applications interfaced to the authorized agents; communicating, by the server, with external systems associated with the transactions; and managing, by the server, each SST through that SST's authorized agent.

The method optionally further comprises signing, by the server, an update package for an operating system (OS) associated with a particular SST, and sending the signed update package to a particular authorized agent for that particular SST.

The step of interacting optionally further includes providing customizations to each of the authorized agents for configuring each authorized agent's thin client application.

The step of providing optionally further includes providing the customizations as profile settings for one or more of: particular SSTs, particular thin client applications, particular customers transacting at particular SSTs, and particular periods of time.

These and other aspects of the present invention will become apparent from the following specific description, given by way of example, with reference to the accompanying drawings, in which:
FIG. 1 is a diagram 100 for an open-source Automated Teller Machine (ATM) platform having thin client capabilities, according to an example embodiment;
FIG. 2 is a diagram of a Self-Service Terminal (SST) thin client, according to an example embodiment;
FIG. 3 is a diagram of a method for operating a SST as a thin client, according to an example embodiment; and
FIG. 4 is a diagram a method for operating a server that services SST thin clients, according to an example embodiment.

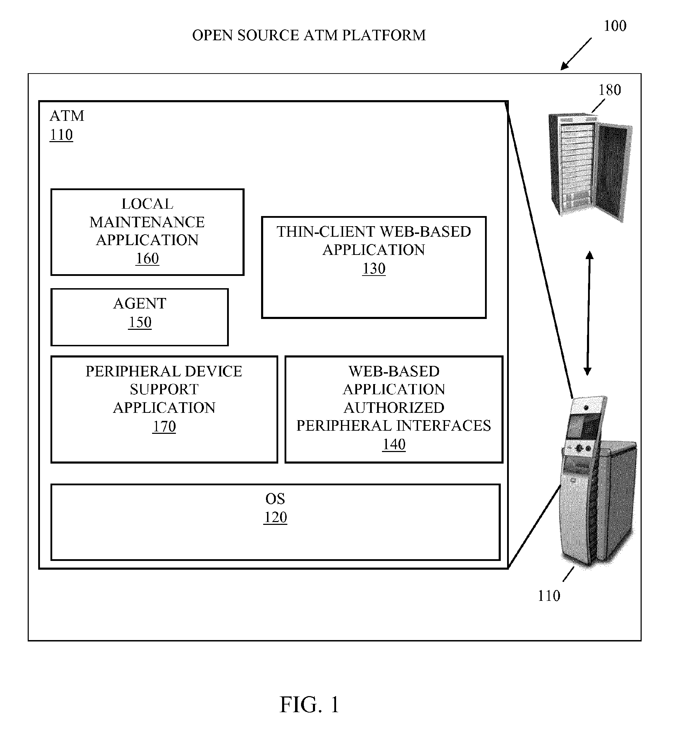

Reference is first made to FIG. 1, which is a diagram 100 of an open-source Automated Teller Machine (ATM) platform having thin client capabilities, according to an example embodiment. The various components are illustrated and the arrangement of the components is presented for purposes of illustration only. It is to be noted that other arrangements with more or less components are possible without departing from the ATM thin client teachings presented herein and below.

The ATM 110, SST, methods, and system presented herein and below for SST thin clients and operation thereof can be implemented in whole or in part in one, all, or some combination of the components shown with the diagram 100. The techniques and methods are programmed as executable instructions in memory and/or non-transitory computer-readable storage media and processed on one or more processors associated with the various components. Moreover, the ATM 110 is shown in greatly simplified form, illustrating primarily (but not exclusively), just the components that are enhanced or that are necessary for comprehending the teachings presented herein.

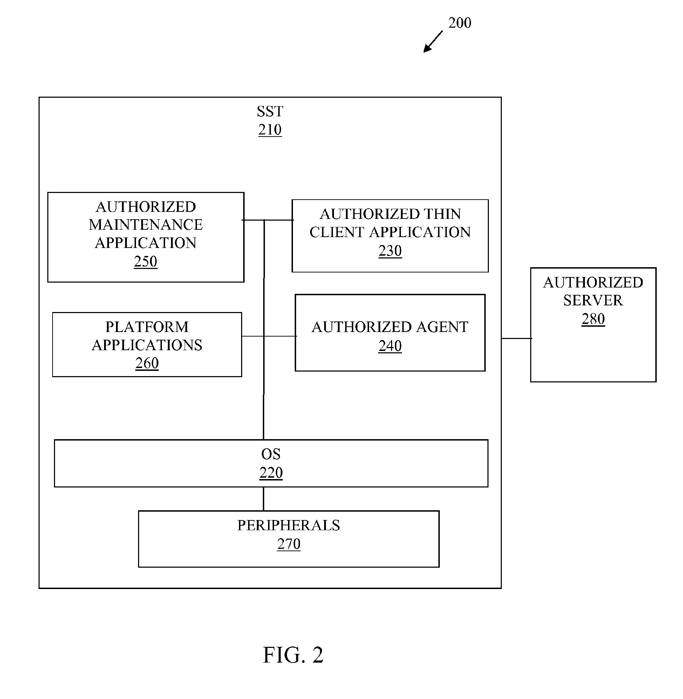

The discussion that follows represents one embodiment of the invention for an embodiment having and operating an ATM thin client application 130. It is noted that any SST, such as a kiosk, or any device can benefit from the teachings presented herein; some of which are discussed with reference to the FIGS. 2-4. Thus, the description that follows below is but one set of embodiments of the invention and is not intended to limit the invention, for example, to only financial transactions at financial facilities.

The ATM 110 includes: an operating system (OS) 120, a thin-client web-based application 130, a suite of web-based application authorized peripheral interfaces 140, an agent 150, a local maintenance application 160, and a peripheral device support application 170. The ATM 110 also communicates with an authorized server 180.

In this embodiment the OS 120 is based on the Android (trade mark) operating system.

In other embodiments, the OS 120 may be based on an OS selected from one of: Tizen (trade mark), Suse (trade mark), Linux, UNIX (trade mark), and open source OSs.

The OS 120 is "vanilla" in the sense that it is a baseline, scaled down, OS image build for the ATM's motherboard with security and resilience enhancements. In particular, the OS 120 requires that only applications that are correctly cryptographically signed can be installed on the OS 120. The owner of the ATM 110 ensures that the OS 120 includes the correct cryptographic coordinates so that only those applications signed by the owner of the ATM 110 will be installed.

The thin-client web-based application 130 is an application that partially includes locally (local to ATM 110) installed code and partially executes/displays remote web content received from the server 180 (a hybrid-type application). Thus, the thin-client web-based application 130 supports cross-platform communications, such that communications directed to the local processing environment associated with the OS 120 can occur as well as communications directed to interfacing with a remote processing environment associated with the authorized server 180.

The thin-client web-based application 130 has a browser engine that provides web-based processing capabilities, such as running of scripts (e.g., JavaScript (trade mark), etc.) and provides a web-based browser platform.

The thin-client web-based application 130 provides a cross-platform interface between the ATM 110 and the authorized server 180 to which the ATM 110 communicates. The authorized server 180 can deliver to the thin-client web-based application 130 scripts for processing by the thin-client web-based application 130 and the thin-client web-based application 130 can communicate back to the authorized server 180 using browser-based communications, such as but not limited to Hypertext Transfer Protocol (HTTP) over a Secure Socket Layer (SSL) (referred to as HTTPS).

The thin-client web-based application 130 has a customer-facing web-based interface that presents on one or more screens of a display of the ATM 110 for a customer to conduct ATM transactions with an external financial system (to which the authorized server is in secure communications with). This provides a rich customer experience with web-based ATM transactional interfaces (such as through the browser engine of the thin-client web-based application 130) and provides a variety of customization features; all of which have heretofore not been capable on traditional ATMs.

In this embodiment, the thin-client web-based application 130 is sandboxed. In particular, the thin-client web-based application 130 includes an API for interaction with the authorized server 180 (external to the processing environment of the ATM 110) and an API for interaction with web-based application authorized peripheral interfaces 140 and, in some instances, the authorized agent 150 (as discussed below). By virtue of sandboxing the thin-client web-based application 130 (i.e. by limiting access to the software listed above), the thin-client web-based application 130 is restricted, for security reasons, to having access only to the peripherals for which the web-based application authorized peripheral interfaces 140 provide access.

In an embodiment, the thin-client web-based application 130 includes an enhanced and customized open source web browser as its browser engine, such as an enhanced Android-based browser (Chrome/Webkit). The browser engine provides interaction with users of the ATM and can be implemented using as a Rich Internet Application (RIA), using Google Web Toolkit (GWT) or other programming languages.

Some, of the web-based application authorized peripheral interfaces 140 may be native interfaces to native peripherals associated with the ATM 110 (e.g., encrypted Personal Identification Number (PIN) keypad, card reader, valuable-media dispenser (dispensing currency, valuable tickets, virtual currency to inserted media, and the like), monitors, printers (for receipts), etc.). By "native" it is meant, that the original peripheral interfaces were directed to existing device drivers for peripherals that a legacy ATM application (replaced herein by the thin-client web-based application 130) had authorized access to.

In some embodiments, these original peripheral interfaces are capable of being ported to the processing environment of the ATM 110 using their original source code (which may need to be recompiled and/or linked on the new OS 120), such that the port results in a number of the web-based application peripheral interfaces 140. In other embodiments, these original peripheral interfaces ported to the processing environment of the ATM 110 are rewritten for the new environment.

In an embodiment, the original peripheral interfaces are rewritten to include device driver support for the peripherals to which they interface, such that the OS 120 lacks a device driver for those peripherals and access to those peripherals occur only through the execution of the web-based application peripheral interfaces 140 acting as "soft" drivers for access to the peripherals. In this context, "soft" drivers means that the driver software is provided in application space rather than operating space (similar to user mode rather than kernel mode for Windows (trade mark) operating systems).

Thus, the thin-client web-based application 130 is sandboxed so that the thin-client web-based application 130 can only access the peripherals in the ATM 110 via the web-based application peripheral interfaces 140. This maintains and ensures a secure processing environment within a container for the thin-client web-based application 130.

The web-based application peripheral interfaces 140 provide the thin-client web-based application 130 with device access and transacting for such things as Europay MasterCard and Visa (EMV) processing to conduct financial transactions at the ATM 110 utilizing the authorized server 180.

The peripheral device support application 170 includes authorized access to the same peripherals that the thin-client web-based application 130 can access (although the thin-client web-based application 130 can only access the peripherals through the web-based application peripheral interfaces 140) and, in some embodiments, access to peripherals or ports that are inaccessible to the thin-client web-based application 130 (for example, support peripherals used by service engineers for other tasks in maintaining and servicing the ATM 110, such as monitors, flash devices, tablets, etc.). The peripheral device support application 170 also includes soft device drivers (providing the enhanced functionality that is not available via the web-based application peripheral interfaces 140) for the peripherals with which it interacts, so that the OS 120 lacks device driver support for those peripherals, thereby increasing security and making it easier to deploy an identical operating system across different configurations of ATM 110.

The peripheral device support application 170 provides services, error logging, settings management, and the like for the peripherals it accesses. The peripheral device support application 170 also interacts with the authorized agent 150 to provide the authorized agent 150 with status notifications relating to those peripherals and metrics (logs, tallies, and the like) about the peripherals.

In an embodiment, most of the applications, including 140 to 170, are implemented as one or more independent Dalvik executables executed by an Android (trade mark) OS 120 (in a Dalvik Virtual Machine (VM)).

Similar to the peripheral device support application 170, the local maintenance application 160 interacts with the authorized agent 150 to provide the authorized agent 150 with status information and metrics relating to the thin-client web-based application 130. Moreover, the local maintenance application 160 provides a configuration User Interface (UI) for configuring the OS 120 and/or the local maintenance application 160. The local maintenance application 160 also provides mechanism for acquiring diagnostics and running tests on the components of the ATM 110. The local maintenance application 160 provides a service engineer with access to advanced diagnostic functionality for the peripherals (device self-tests, log data, tallies of tasks performed by that peripheral, etc.). The local maintenance application 160 may provide similar functionality to the system application program provided by NCR Corporation (trade mark) on conventional ATMs.

The local maintenance application 160, the web-based application peripheral interfaces 140, and the peripheral device support application 170 could have the ability to directly communicate with the authorized server 180 (such as for authorization capabilities). However, 140, 160, and 170 have a capability to offer a majority of their function without access to server 180. The local maintenance application 160 and the peripheral device support application 170 can communicate with the thin-client web-based application 130 (for example, to inform the thin-client web-based application 130 that a card has been inserted, or that dispensed cash has been taken - events from the connected devices are passed up to the thin-client web-based application 130).

Any communication with the external server 180 must originate from the thin-client web-based application 130 and/or the authorized agent 150. Any communication from the local maintenance application 160 and the peripheral device support application 170 with the thin-client web-based application 130 must occur through the authorized agent 150.

All communication between the thin-client web-based application 130 and components of the ATM 110 occurs through a secure API provided by the thin-client web-based application 130. Also, communications that do occur between the authorized agent 150 and the components of the ATM 110 can be done in a secure manner using cryptography and signature verification. If a component is hijacked or modified in an unauthorized manner, the thin-client web-based application 130 can detect an invalid communication and reject that communication. Similarly, any cryptology and signature validation that would normally take place between peripherals and an ATM application (the one performing financial transactions) can remain unchanged in the thin-client web-based application 130 and the peripherals to which the thin-client web-based application 130 has access (through the web-based application peripheral interfaces 140).

The authorized agent 150 securely communicates (can be based on trust between the components of the ATM 110 or can be secured using encrypted communications and/or key/signature validation) with the thin-client web-based application 130. Moreover, the authorized agent 150 securely communicates with the authorized server 180.

The authorized agent 150 provides a number of capabilities within the ATM 110. For example, the authorized agent 150 can force an update to the OS 120, which may actually also perform an update on the authorized agent 150 (in other words, the authorized agent 150 can initiate an update of itself). The authorized agent 150 can also update the other components of the ATM 110 including the thin-client web-based application 130.

The authorized agent 150 provides a mechanism for the authorized server 180 to deliver customizations to the thin-client web-based application 130, the OS 120, and/or the other components of the ATM 110.

In an embodiment, the authorized agent 150 receives customized settings that personalize the user-presented web interface provided by the thin-client web-based application 130. These settings can be delivered to the authorized agent 150 from the authorized server 180 based on any desired configuration and any desired frequency, such as: for a particular bank branch, for a particular financial institution that a customer is transacting with though the ATM 110 (which may or may not be the same bank associated with the bank branch of the ATM 110), for a particular customer transacting at the ATM 110, for a particular class of customers to which the customer belongs, for a particular calendar day, for a particular promotion, and the like. However, in other embodiments it may be preferable for the server 180 to deliver the customized content directly to the ATM 110 in response to requests from the thin-client web-based application 130.

In an embodiment, the authorized agent 150 acts as a proxy between the thin-client web-based application 130 and the authorized server 180 (here the thin-client web-based application 130 may not have any direct access to the authorized server 180). This can be done to provide caching services, for example images of screen presentations provided in the web user interface within the thin-client web-based application 130 (reducing network bandwidth for the thin-client web-based application 130 to acquire redundant images from the authorized server on each customer transaction), or to perform pre-fetch functions so that content that will shortly be required by the thin-client web-based application 130 may be fetched by the agent 150 in advance, thereby speeding up a transaction.

In an embodiment, the authorized agent 150 provides mechanisms for fault management, recovery services, and backup services to the components of the ATM 110.

In an embodiment, the authorized agent monitors for (and/or receives notifications of) hardware and/or software component errors of the ATM 110 and reports these to the authorized server 180, which can then take remedial action (by issuing remote commands to the ATM 110 or by dispatching service engineers to service the ATM 110).

When the ATM 110 is booted up then the ATM 110 contacts the authorized server 180 to ascertain if the OS 120 is the latest version. If a more up-to-date version is available then the ATM 110 downloads and installs this. If the thin client web-based application 130 is not present, then the ATM 110 downloads this, and it is installed (provided the thin client web-based application 130 includes a valid cryptographic certificate).

An example scenario for the operation of the ATM 110 is now presented for purposes of illustration and comprehension only and the example scenario is not intended to restrict the various embodiments presented herein to just this scenario.

A customer approaches ATM 110 to withdraw money from the customer's bank account. The presentations presented on the screens of the display of the ATM 110 are provided in a web-based format from the thin-client web-based application 130. Those presentations are customized (logos, advertisement, placement and appearance of standard entry fields and buttons, etc.) for the bank associated with the ATM 110 by the server 180 (or in other embodiments, based on the authorized agent 150 configuration actions for those customizations, where the authorized agent 150 receives those customizations from the authorized server 180).

The customer enters his/her bank card into a card reader in the ATM 110 (one of the approved peripherals) and then enters his/her PIN via the encrypting PINpad (another approved peripheral). The thin-client web-based application 130 communicates with the card reader and the encrypted PINpad device through the web-based application authorized peripheral interfaces 140. The web-based application authorized peripheral interfaces 140 provide the commands and responses necessary for the thin-client web-based application 130 to interact with the card reader and the encrypting PINpad. These responses from the web-based application authorized peripherals 140 to the thin-client web-based application 130 include, for example, the customer identifier (from the bank card), bank and transaction details (from the bank card and the encrypting PINpad) along with an encrypted PIN (from the encrypting PINpad) for the customer.

The thin-client web-based application 130 collates these responses and sends an authorization request via a secure connection to the authorized server 180.

The authorized server 180 typically routes this authorization request to a relevant authorization system, such as a core banking system for the bank that operates the ATM 110 (for an on-us transaction) or a third party financial institution (for a not-on-us transaction). This authorization request may be routed as a conventional ISO 8583 transaction request.

On receipt of a transaction approved response to the authorization request, the authorized server 180 returns an authorization for the amount to withdraw to the thin-client web-based application 130.

The thin-client web-based application 130 then sends the amount to withdraw to a currency dispenser (through the web-based application authorized peripherals 140). The dispenser (which is an approved peripheral) counts the currency equivalent to the amount, activates a dispenser door, and dispenses the currency to the customer (the dispenser may also independently validate the amount to withdraw through cryptography, for example, by receiving an encrypted authorization from the authorized server 180 that is not decipherable by the thin-client web-based application 130).

The activation of the components in the transaction and timing of the components may be logged and recorded for subsequent use by the local maintenance application 160 and the peripheral device support application 170.

In one case, for this example scenario the authorized agent 150 acts as a proxy between the authorized server 180 and the thin-client web-based application 130, such that much of the format and images associated with the presentations on the screens of the ATM display that the customer sees and interacts with (via touch or keypad entry), are served from local cache of the ATM 110 to the thin-client web-based application 130 to reduce processing times and improve responsive times for the customer while transacting at the ATM 110.

It should now be appreciated that in the architecture of the open-source ATM platform having thin client capabilities 100 the server 180 provides most of the functions of a traditional ATM terminal handler (which would historically be performed by an ATM switch), such that only the actual transaction authorization may be routed to an ATM switch (or sent directly to another authorization system). This increases security, simplifies content update and provision, simplifies ATM network updates, and the like.

These (above-discussed) embodiments and other embodiments are now discussed with reference to the FIGS. 2-4.

FIG. 2 is a diagram of an SST thin client architecture 200, according to an example embodiment. The components of the SST thin client architecture 200 are a self-service terminal 210 and an authorization server 280. The self-service terminal 210 include applications that are programmed and reside within memory and/or a non-transitory computer-readable medium and execute on one or more processors of the SST 210 (may also be referred to as SST terminal 210). The SST 210 has access and can communicate over one or more networks; and the networks can be wired, wireless, or a combination of wired and wireless.

The SST 210 includes an OS 220, an authorized thin-client application 230, and an authorized agent 240 (components 220 to 240 are software modules or a set of modules that execute on one or more processors of the SST 210). The SST 210 may also optionally include an authorized maintenance application 250 and platform applications 260 (components 250 to 260 are software modules or a set of modules that execute on one or more processors of the SST 210). The executable instructions reside in memory and/or a non-transitory computer-readable storage medium accessible to the SST 210.

The OS 220 is configured to restrict execution of software on the SST 210 to software modules authorized for execution thereon.

In an embodiment, the OS 220 is the OS 110 of the FIG. 1.

The authorized thin client 230 is configured to access predefined peripheral devices 270 within the SST thin client 210 and an authorized server 280.

The authorized thin client application 230 is only able to access the predefined peripheral devices 270. It is noted that the SST 210 may have other peripheral devices (not shown in the FIG. 2) but the authorized thin client 230 has no access to these other peripherals. For example, if a peripheral device is added during operation of the SST 210 then it will not be accessible to the authorized thin client application 230, thereby reducing the risk of rogue peripherals being added to defraud the SST 210.

In an embodiment, where security is a concern (e.g., access to a cash dispenser device of an ATM (SST 210), the access provided to the authorized thin client application 230 will be made inherently secure to prevent rogue content (e.g., cross-site scripting attack, etc.) from accessing valuables within the ATM. This can be done by ensuring that any such access requires cryptographically secure authorization from the authorized server 280 to the peripherals 270. This has the added advantage that security can be controlled at the server level, potentially for an entire SST estate, rather than having to be implemented individually at each SST.

In an embodiment, the authorized thin client 230 is configured to use a peripheral interface for interacting with the predefined peripheral devices 270 and a user interface for interacting with a customer interacting at the SST 210. The peripheral interface may communicate with one or more of the platform applications 260.

In an embodiment, the user interface is a web-based browser interface.

In an embodiment, the authorized thin client application 230 is the thin-client web-based application 130 of the FIG. 1.

In an embodiment, the authorized thin client application 230 uses web-based application authorized peripheral interfaces 140 to access the peripheral devices 270 (the web-based application authorized peripheral interfaces 140 act as soft device drivers within the OS 220 for the peripheral devices 270).

The authorized agent 240 is configured to connect to the authorized server 280 and to manage updates to the OS 220, the updates received from the authorized server 280.

In an embodiment, the authorized agent 240 is the agent 150 of FIG. 1.

In an embodiment, the authorized agent 240 is further configured to download content anticipated for use by the authorized thin client application 230, intercept requests from the authorized thin client application 230, and provide the content to the authorized thin client application 230 in response to the intercepted requests. Thus, the authorized agent 240 can act as a cache manager and/or a forward or transparent proxy for the authorized thin client application 230 with respect to the authorized server 280. This improves efficiency and reduces network traffic.

According to an embodiment, the authorized agent 240 is further configured to receive customization instructions from the authorized server 280 and apply those customizations to the authorized thin client application 230.

The authorized agent 240 may also be configured to apply some customization instructions during initialization of the SST 210 and other of the customization instructions on a transaction basis based on an identity of a customer transacting at the SST 210. The frequency of customizations and conditions that warrant the customizations can be controlled by policy driven by the authorized server 280 in communications with the authorized agent 240. In some cases, the authorized server 280 can delegate policy conditions for dynamic evaluation to be performed by the authorized agent 240.

In an embodiment, the SST 210 includes an authorized maintenance application 250 configured to execute on the SST 210 to provide a variety of maintenance, testing, and diagnostic functions to an authorized user of the SST 210. In an embodiment, the authorized maintenance application 250 is the local maintenance application 160 of FIG. 1. In an embodiment, the authorized maintenance application 250 includes one or more of the peripheral device support applications 170 of FIG. 1.

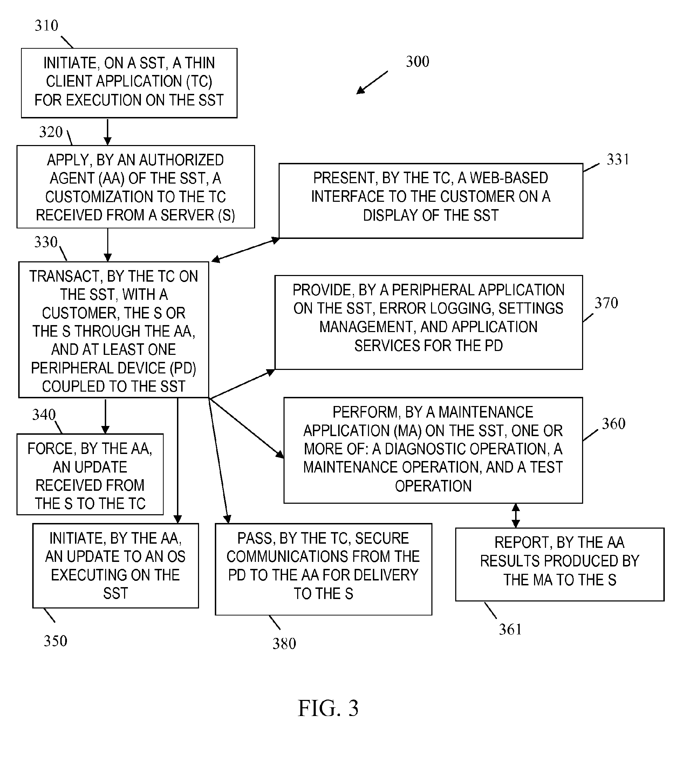

FIG. 3 is a diagram of a method 300 for operating a SST as a thin client, according to an example embodiment. The software module(s) that implements the method 300 is referred to as an "SST thin client manager." The SST thin client manager is implemented as executable instructions programmed and residing within memory and/or a non-transitory computer-readable (processor-readable) storage medium and executed by one or more processors of an SST. The processor(s) of the SST that executes the SST thin client manager is specifically configured and programmed to process the SST thin client manager. The SST thin client manager has access to one or more networks during its processing. The networks can be wired, wireless, or a combination of wired and wireless.

In an embodiment, the SST that processes the SST thin client application is the ATM 110 of the FIG. 1.

In an embodiment, the SST that processes the SST thin client application is the SST 210 of the FIG. 2.

In an embodiment, the SST that process the SST thin client application is a kiosk.

In an embodiment, the SST thin client manager is one or more of the components of the FIG. 1.

In an embodiment, the SST thin client manager is one or more of the components of the FIG. 2.

At 310, the SST thin client manager, initiates a thin client application on the SST for execution on the SST.

In an embodiment, the thin client application is the thin-client web-based application 130 of FIG. 1.

In an embodiment, the thin client application is the authorized thin client application 230 of FIG. 2.

At 320, an authorized agent executing on the SST applies a customization to the SST thin client application received from a server. For example, authorized agent 240 interacts with authorized server 280 to customize features (function and user interface attributes and content) of the SST thin client application. This can occur while the SST thin client application is executing on the SST.

In an embodiment, the authorized agent is the agent 150 of the FIG. 1.

In an embodiment, the authorized agent is the authorized agent 240 of the FIG. 2.

At 330, the SST thin client application interacts on the SST with (i) a customer (executing a transaction at the SST), (ii) the server directly, (iii) the server through the authorized agent, and/or (iv) at least one peripheral device coupled to (installed in) the SST. The SST thin client application interactions may be restricted to just predefined peripherals from a set of available peripherals to enhance security. Moreover, in some cases, the SST thin client application may only be able to communicate with: (i) the authorized agent, (ii) the predefined peripherals within the processing environment of the SST, and (iii) the server, which is external to the SST.

In an embodiment, the server is the server 180 of FIG. 1.

In an embodiment, the server is the authorized server 280 of FIG. 2.

According to an embodiment, at 331, the SST thin client application presents a web-based interface to the customer on a display of the SST for interaction with the customer.

In an embodiment, at 340 the authorized agent forces an update received from the server on the SST thin client application. In other words, the authorized agent may initiate an update without the SST thin client application being able to defer or over-ride the update.

In an embodiment, at 350, the authorized agent updates an OS executing on the SST.

In an embodiment, at 360, a maintenance application executing on the SST performs one or more of: a diagnostic operation, a maintenance operation, and a test operation. In an embodiment, the maintenance application is the local maintenance application 160 of the FIG. 1. In an embodiment, the maintenance application is the authorized maintenance application 250 of the FIG. 2.

In an embodiment of 360 and at 361, the authorized agent reports (that is, transmits) the results produced by the maintenance application to the server.

In an embodiment, at 370, a peripheral application executing on the SST provides error logging, settings management for peripherals of the SST, and application services for the peripheral devices. In an embodiment, the peripheral application is the peripheral device support application 170 of the FIG. 1. In an embodiment, the peripheral application is one or more of the platform applications 260 of the FIG. 2.

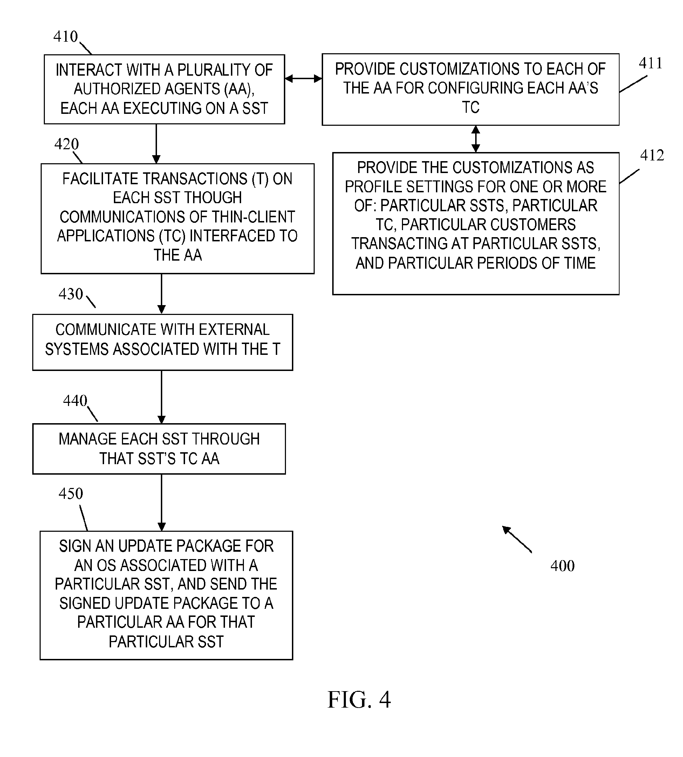

FIG. 4 is a diagram a method 400 for operating a server that services SST thin clients (such as ATM 110 and SST 210), according to an example embodiment. The software module(s) that implement the method 400 is referred to herein as an SST authorized server manager. The SST authorized server manager is implemented as executable instructions and programmed within memory and/or a non-transitory computer-readable (processor-readable) storage medium that executes on one or more processors of a server. The processors of the server are specifically configured to execute the SST authorized server manager. The SST authorized server manager can access one or more networks; the networks can be wired, wireless, or a combination of wired and wireless.

In an embodiment, the server that processes the method 400 is the server 180 of FIG. 1.

In an embodiment, the server that processes the method 400 is the authorized server 280 of FIG. 2.

At 410, the SST authorized server manager interacts with a plurality of authorized agents, each authorized agent executing on an independent SST from the other authorized agents.

In an embodiment, each authorized agent is an instance of the agent 150 of FIG. 1

In an embodiment, each authorized agent is an instance of the authorized agent 240 of FIG. 2.

According to an embodiment, at 411, the SST authorized server manager provides customizations to each of the authorized agents for configuring each authorized agent's thin client application. In an embodiment, each thin client application is an instance of the thin-client web based application 130 of FIG. 1. In an embodiment, each thin client application is an instance of the authorized thin client application 230 of FIG. 2.

In an embodiment of 411 and at 412, the SST authorized server manager provides the customizations as profile settings for one or more of: particular SSTs, particular thin client applications, particular customers transacting at particular SSTs, and particular periods of time.

According to an embodiment of 412, the SST authorized server manager provides the customizations with conditions that each authorized agent is to dynamically evaluate to resolve when to apply a customization on a thin client application and what to apply as that customization.

At 420, the SST authorized server manager facilitates transactions on each SST through communications of the thin client applications, which are interfaced to or in communication with the authorized agents.

At 430, the SST authorized server manager communicates with external systems associated with the transactions. Such as particular financial systems or enterprise systems associated with the customer transactions at the SSTs. For example, if the customer has an account with a different financial institution than the one operating the SST, then the SST authorized server manager communicates with that customer's financial institution to obtain authorization for the transaction.

At 440, the SST authorized server manager manages each SST through that SST's authorized agent.

According to an embodiment, at 450, the SST authorized server manager digitally signs an update package for an OS associated with a particular SST and sends the signed update package to a particular authorized agent for that particular SST. That authorized agent then validates the signature of the signed update package and forces an update to that OS on the particular SST by executing the update package. The SST authorized server manager can also do updates in a similar fashion for any application (including the authorized agent) executing on the SSTs with which the SST authorized server manager communicates.

One now full appreciates how an SST can be modularized to operate that SST as a thin client of a server with improved customization, feature function delivery, processing efficiency, maintenance, support, fault tolerance, and diagnostic testing.

It should now be appreciated that embodiments of the present invention have the advantage that a homogeneous ATM software stack is provided. Because the ATM software stack is entirely homogeneous, it can be cryptographically secured such that no additional software can be introduced that is not digitally signed, providing a highly secure software solution without compromise to the solution flexibility. Preferably, an operating system other than a Windows operating system (i.e. a non-Windows operating system) is used in the above embodiments. Because the network connections from the ATM are predefined and fixed, a secure network VPN infrastructure can be deployed to maximize network security. The architectures described above ensure that the resident ATM application contains only invariant software that is common to all ATMs and customer environments. Customization of the consumer experience (look and feel, available transactions) can be performed entirely at the authorized server 180, 280.

In the above embodiments, the ATMs 110, 210 can be deployed and configured very simply. The ATM 110, 210 can be bootstrapped with a minimal configuration. By entering one or two pieces of initial data (e.g., ATM identification and a network endpoint), the authorized server 180, 280 can determine any specific configuration required for that ATM 110, 210, and provide that information to the ATM 110, 210. After this simple process, the ATM 110, 210 (once securely provisioned with cash) is immediately available for use.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claims have more features than are expressly recited in each claim. Rather, as the following claims reflect, inventive subject matter lies in less than all features of a single disclosed embodiment.

## Claims

1. A self-service terminal (110 or 210) comprising:
an operating system (120 or 220) configured to restrict execution on the terminal (110 or 210) to authorized applications;
an authorized thin-client application (130 or 230) configured to access: (i) predefined peripheral devices (270) within the terminal (110 or 210) and (ii) an authorized server (180 or 280); and
an authorized agent (150 or 240) configured to connect to the authorized server (180 or 280) and to manage updates to the operating system (120 or 220) received from the authorized server (180 or 280).

2. The terminal of claim 1 further comprising, an authorized maintenance application (160 or 250) configured to execute on the terminal (110 or 210) and operable to provide maintenance, testing, and diagnostic functions to an authorized user of the terminal (110 or 210).

3. The terminal of claim 1 or 2, wherein the operating system (120 or 220) is configured to restrict execution on the terminal (110 or 210) to authorized applications (130, 140, 150, 160, 170) by ensuring that each application includes a valid cryptographic certificate.

4. The terminal of any preceding claim, wherein the authorized agent (150 or 240) is further configured to: (i) download content anticipated for use by the authorized thin client application (130 or 230), (ii) intercept requests from the authorized thin client application (130 or 230) to the authorized server (180 or 280) for content, and (iii) provide the content to the authorized thin client application (130 or 230) in response to the intercepted requests.

5. The terminal of any preceding claim, wherein the authorized agent (150 or 240) is further configured to receive customization instructions from the authorized server (180 or 280) and apply those customizations to the authorized thin client application (130 or 230).

6. The terminal of claim 5, wherein the authorized agent (150 or 240) is further configured to apply some customization instructions during initialization of the terminal (110 or 210) and other of the customization instructions on a transaction basis based on an identity of a customer.

7. The terminal of any preceding claim, wherein the authorized thin client application (130 or 230) is further configured to: use a peripheral interface (140) for interacting with the predefined peripheral devices (270) and use a user interface for interacting with a customer transacting at the terminal (110 or 210).

8. A method of managing a network of self-service terminals (110 or 210), the method comprising:
receiving a request from an authorized agent (150 or 240) executing on a self-service terminal (110 or 210) in the network;
ascertaining if the self-service terminal (110 or 210) is executing a latest version of an operating system (120 or 220) or application (130 or 230);
providing the latest version of the operating system (120 or 220) or application (130 or 230), respectively, in the event that the latest version is not executing on the self-service terminal (110 or 210), where the latest version (120 or 220) includes a cryptographic message that can be validated by the self-service terminal (110 or 210), and wherein the latest version of the operating system (120 or 220) or application (130 or 230) is identical for a plurality of self-service terminals (110 or 210) in the network.

9. A method according to claim 8, wherein the step of ascertaining if the self-service terminal (110 or 210) is executing a latest version of an operating system (120 or 220) or application (130 or 230) includes the sub-step of comparing a version of the operating system (120 or 220) received as part of the request with the latest version available for self-service terminals (110 or 210) in that network.

10. A method according to claim 8 or 9, wherein providing the latest version of the operating system (120 or 220) or application (130 or 230) includes providing the same latest version to all of the self-service terminals (110 or 210) in the network, in response to requests therefor, so that all of the self-service terminals (110 or 210) in the network have a homogeneous software stack identical to the other self-service terminals (110 or 210) in the network.

11. A method according to any of claims 8 to 10, wherein the method further comprises the step of providing content to the self-service terminal (110 or 210) for presentation to a customer of the self-service terminal (110 or 210) as part of a customer transaction.

12. A method according to any of claims 8 to 11, wherein the method comprises the further step of establishing a fixed and predefined network connection to each self-service terminal in the network, and creating a virtual private network connection to each of the self-service terminals (110 or 210) in the network.
